# DEMANDE DE BREVET EUROPEEN

(11) **EP 1 217 187 A1**
(43) Date de publication de la demande: **26.06.2002**
(21) Numéro de dépôt: 01403247.8
(22) Date de dépôt: 14.12.2001
(51) Int. Cl.: F02B 27/02

(54) **Circuit d'admission d'air d'un moteur suralimenté**

(30) Priorité: 19.12.2000 FR 0016560
(71) Demandeur: Renault, 92100 Boulogne Billancourt (FR)
(72) Inventeur: Christou, Panagiotis, 94300 Vincennes (FR)

(57) **Abrégé**

L'invention concerne un circuit (14) d'admission d'air d'un moteur (12) suralimenté par un turbocompresseur (18) du type qui comporte un conduit d'admission (26) qui relie le compresseur (22) du turbocompresseur (18) et un répartiteur (34) d'air qui permet de répartir l'air entre les orifices d'admission des chambres de combustion, caractérisé en ce qu'une portion intermédiaire (50) est insérée dans le conduit d'admission (26) et en ce que le volume de la portion intermédiaire est variable de façon à faire varier la fréquence de résonance du circuit (14) d'admission en fonction de la fréquence d'excitation du moteur (12) pour favoriser le remplissage naturel des chambres de combustion du moteur (12).

## Description

L'invention propose un circuit d'admission d'air d'un moteur.

L'invention propose plus particulièrement un circuit d'admission d'air d'un moteur suralimenté par un turbocompresseur.

Il est fréquent que les moteurs, notamment les moteurs diesel, soient suralimentés par un turbocompresseur de façon à améliorer leurs performances. Le turbocompresseur permet notamment d'augmenter leur rendement et leur puissance.

Pour chaque moteur, il est nécessaire de dimensionner correctement le turbocompresseur et, il faut optimiser la taille du turbocompresseur.

Un "gros" turbocompresseur présente un rendement optimal pour un débit et une pression des gaz d'échappement élevés. De tels débit et pression sont fournie par le moteur lorsqu'il fonctionne à hauts régimes. À bas régimes, un gros turbocompresseur présente un rendement médiocre, du fait notamment de son inertie importante.

De plus lorsque le régime du moteur est inférieur à un régime prédéterminé, le turbocompresseur ne fonctionne pas car le débit et la pression des gaz d'échappement sont trop faibles. Le régime prédéterminé est appelé régime d'accrochage du turbocompresseur.

Un "petit" turbocompresseur présente un régime d'accrochage plus faible que celui d'un gros turbo compresseur. Il présente aussi un rendement optimal pour des valeurs de débit et de pression des gaz d'échappement plus faibles que celles nécessaires pour un gros turbocompresseur. Cependant, il est limité pour un fonctionnement à des régimes plus élevés, car la totalité des gaz d'échappement fournis par le moteur ne peuvent participer à l'augmentation de la pression de l'air frais par le compresseur.

Le compromis est difficile à trouver puisqu'il est nécessaire que le rendement du moteur soit optimal dans une plage importante de régimes allant de bas régimes de l'ordre de 1000 tours par minute à des hauts régimes de l'ordre de 4500 tours par minute.

En général, le dimensionnement est réalisé pour que le rendement du turbocompresseur soit acceptable à des faibles régimes du moteur. Par conséquent de tels compresseurs ne permettent pas l'augmentation optimale de la compression de l'air frais à des régimes élevés.

La détermination du débit et de la pression des gaz d'échappement dépendent des caractéristiques du moteur, c'est-à-dire notamment de sa cylindrée, ainsi que du remplissage naturel des chambres de combustion de ses cylindres.

Le remplissage naturel correspond à la quantité d'air effectivement admise dans les chambres de combustion des cylindres du moteur.

Pour chaque moteur, à chaque régime de fonctionnement, correspond une quantité d'air théorique qui est admise dans les chambres de combustion des cylindres du moteur.

Le rapport entre le remplissage naturel et la quantité d'air théorique définit le rendement volumétrique du moteur.

Ainsi, une augmentation du remplissage naturel, donc du rendement volumétrique naturel, à bas régimes du moteur, permet d'augmenter le débit ainsi que la pression des gaz d'échappement, et par conséquent permet au turbocompresseur de fonctionner à des régimes du moteur plus bas. Cela permet aussi l'augmentation du rendement du turbocompresseur à bas régimes et/ou l'utilisation d'un turbocompresseur plus gros qui améliore le rendement du moteur à des régimes plus élevés. Dans tous les cas l'augmentation du rendement volumétrique naturel à bas régime est avantageux.

Il est connu pour certains moteurs tels que les moteurs à aspiration naturelle, c'est-à-dire sans turbocompresseur, d'utiliser les effets de la résonance acoustique du circuit d'admission qui est liée à la propagation d'ondes de dépression dues aux cylindres, notamment lors de l'ouverture et de la fermeture des soupapes d'admission.

Lorsque la fréquence de résonance du circuit d'admission correspond à la moitié d'une fréquence de rotation déterminée du vilebrequin du moteur, le rendement volumétrique naturel est augmenté ce qui améliore les performances du moteur au régime correspondant à la fréquence de rotation déterminée.

En effet, l'air est alors soumis à un régime vibratoire qui est en phase avec les instants d'ouverture et de fermeture des soupapes d'admission des chambres de combustion, ce qui favorise leur remplissage.

Cependant, chaque circuit d'admission présente une seule fréquence de résonance. Ainsi il n'est possible de favoriser qu'un seul régime du moteur.

Par conséquent, il est courant d'adapter le turbocompresseur pour qu'il présente un rendement satisfaisant aux bas régimes, en défavorisant ainsi le fonctionnement du turbocompresseur aux hauts régimes.

Une solution consiste en ce que chaque chambre de combustion soit reliée à un répartiteur d'air, agencé en aval du circuit d'admission, par deux conduits d'alimentation de géométries différentes. Des moyens de dérivation permettent d'orienter le flux d'air dans l'un ou l'autre des conduits d'alimentation en fonction du régime du moteur.

Cependant, un tel circuit est difficile à réaliser. En effet, le doublement du nombre de conduits d'alimentation rend plus complexe ies usinages et/ou assemblages à réaliser entre le répartiteur et les chambres de combustion.

Il provoque une augmentation des pertes de charges qui réduisent fortement les gains de rendement ainsi obtenus.

Une telle solution n'est donc pas transposable à un moteur suralimenté par un turbocompresseur.

En effet, une petite diminution de la pression d'alimentation de la turbine provoque une importante diminution des performance turbocompresseur.

De plus, un tel circuit ne permet de favoriser que deux régimes de rotation du moteur.

De façon à fournir une solution à ces problèmes, l'invention propose un circuit d'admission d'air d'un moteur suralimenté par un turbocompresseur du type qui comporte un conduit d'admission qui relie le compresseur du turbocompresseur et un répartiteur d'air qui permet de répartir l'air entre les orifices d'admission des chambres de combustion, caractérisé en ce qu'une portion intermédiaire est insérée dans le conduit d'admission et en ce que le volume de la portion intermédiaire est variable de façon à faire varier la fréquence de résonance du circuit d'admission en fonction de la fréquence d'excitation du moteur pour favoriser le remplissage naturel des chambres de combustion du moteur.

Selon d'autres caractéristiques de l'invention :
- la portion intermédiaire comporte au moins un premier tronçon dont la section est sensiblement égale à la section du conduit d'admission, et la longueur est variable de façon à faire varier la fréquence de résonance du circuit d'admission ;
- la portion intermédiaire comporte au moins un second tronçon dont la section est supérieure à la section du conduit d'admission, et la longueur du second tronçon est variable est variable de façon à faire varier la fréquence de résonance du circuit d'admission ;
- le premier et/ou le second tronçon comporte un soufflet ;
- le premier et/ou le second tronçon comporte un élément télescopique ;
- la longueur d'au moins un tronçon du conduit d'admission est commandée par un actionneur mécanique relié à une extrémité mobile du tronçon correspondant ;
- les longueurs du premier et du second tronçons sont établies simultanément par un actionneur mécanique unique ;
- la longueur totale du conduit d'admission est constante et l'actionneur unique fait varier les longueurs respectives du premier et du second tronçons ;
- le premier tronçon est agencé en aval du second tronçon, par rapport au sens de l'écoulement de l'air dans le conduit d'admission ;
- l'extrémité aval, du premier tronçon et l'extrémité amont du second tronçon sont fixes, et l'extrémité amont du premier tronçon et l'extrémité aval du second tronçon sont liées entre elles ainsi qu'à un actionneur unique de façon que lorsqu'on augmente la longueur du premier tronçon, on diminue d'autant la longueur du second tronçon et inversement ;
- un dispositif de refroidissement d'air est agencé dans le circuit d'admission en aval de la turbine du turbocompresseur et en amont de la portion intermédiaire ;
- l'extrémité amont du second tronçon est raccordée directement à la sortie du dispositif de refroidissement d'air.

D'autres caractéristiques et avantages de l'invention apparaîtront à la lecture de la description détaillée qui suit pour la compréhension de laquelle on se reportera aux figures annexées parmi lesquels :
- la figure 1 représente schématiquement un moteur à combustion suralimenté par un turbocompresseur et un circuit d'admission réalisé selon l'état de la technique ;
- la figure 2 représente schématiquement un moteur à combustion suralimenté par un turbocompresseur et un circuit d'admission réalisé selon l'invention ;
- les figures 3 et 4 représentent des vues similaires à celle représentée à la figure 2, selon deux autres variantes de réalisation du circuit d'admission selon l'invention.

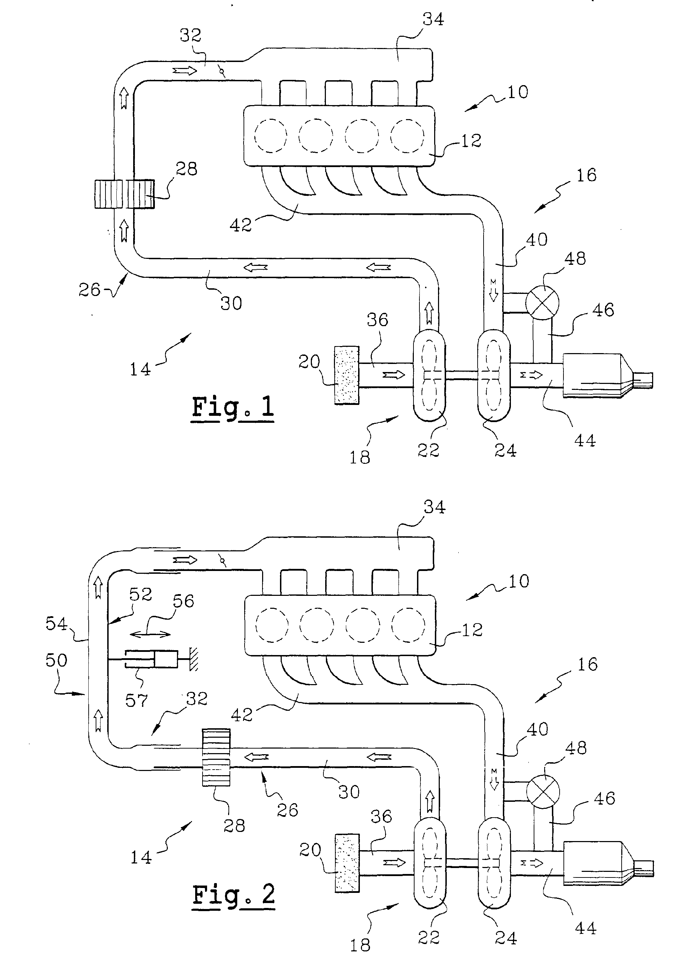

La figure 1 représente un groupe motopropulseur suralimenté 10 selon l'état de la technique. Il est composé principalement d'un moteur à combustion 12, d'un circuit d'admission 14, d'un circuit d'échappement 16 et d'un turbocompresseur 18.

Un filtre à air 20 est situé en amont du circuit d'admission 14 qui permet de retenir les particules présentes dans l'air frais provenant de l'atmosphère.

Le turbocompresseur 18 comprend un compresseur 22 qui met sous pression de l'air frais atmosphérique et une turbine 24 qui fournit l'énergie mécanique nécessaire à l'entraînement du compresseur 22.

Le circuit d'admission 14 comporte un conduit d'admission 26 dans lequel est agencé un dispositif de refroidissement 28 qui permet de refroidir l'air d'admission provenant du compresseur 22.

Le conduit d'admission 26 est alors divisé en un premier élément amont 30 et un second élément aval 32 situés de part et d'autre du dispositif de refroidissement 28 respectivement. Le second élément aval 32 débouche dans un répartiteur d'air 34 qui alimente les chambres de combustion du moteur 12.

Lors du fonctionnement du groupe motopropulseur 10, l'air frais provenant de l'atmosphère est admis dans un tronçon d'entré 36 du circuit d'admission 14 après avoir traversé le filtre à air 20. Il est alors aspiré, puis comprimé par le compresseur 22. La compression de l'air provoque son échauffement. L'air est ensuite refroidi lors de son passage dans le dispositif de refroidissement 26. À la sortie de ce dernier, le second élément aval 32 conduit l'air frais comprimé dans le répartiteur d'air 34.

Après la combustion, les gaz d'échappement G sous pression sont rejetés dans une conduite d'échappement 40 par l'intermédiaire d'un collecteur d'échappement 42 qui alimente la turbine 24.

Les gaz d'échappement sont alors rejetés dans l'atmosphère par un tronçon de sortie 44 du circuit d'échappement 16. Un conduit de dérivation 46 permet de dériver une partie des gaz d'échappement G directement de la conduite d'échappement 40 vers le tronçon de sortie 44. Une vanne 48 est insérée dans le conduit de dérivation 46 pour contrôler le flux de gaz qui circule dans le conduit de dérivation 46. Ainsi, lorsque le débit des gaz d'échappement G est supérieur au débit maximal admissible par la turbine 24, le conduit de dérivation 46 permet d'évacuer la différence entre les deux débits directement vers le tronçon de sortie 44.

Un groupe motopropulseur 10 équipé d'un tel circuit d'admission 14 ne permet pas un rendement optimal du moteur 12. Ceci est notamment dû au remplissage des chambres de combustion du moteur.

Tel que décrit précédemment, un tel circuit d'admission 14 ne permet pas un fonctionnement optimal du turbocompresseur 18 dans une plage de fonctionnement du moteur suffisamment large. Par conséquent, les performances du moteur 12 ne sont pas optimales.

La présente invention propose un circuit d'admission 14 qui permet d'augmenter le rendement volumique des chambres de combustion pour diminuer le régime d'accrochage de façon que le turbocompresseur 18 puisse fonctionner dans une plage de régimes plus importante et pour augmenter le rendement du turbocompresseur 18.

L'augmentation du rendement du turbocompresseur 18 augmente le rendement volumique du moteur 12, et par conséquent le rendement du moteur 12 dans une large plage de fonctionnement du moteur.

Pour ce faire l'invention propose que le circuit d'admission 14 comporte une portion intermédiaire 50 qui est insérée dans le conduit d'admission 26, et dans lequel le volume de la portion intermédiaire 50 est variable de façon à faire varier la fréquence de résonance du circuit d'admission 14 en fonction de la fréquence d'excitation du moteur 12, pour favoriser le remplissage naturel des chambres de combustion du moteur 12.

En effet, à chaque régime du moteur correspond une fréquence de vibration du circuit d'admission 14 qui favorise le remplissage naturel des chambres de combustion du moteur 12.

Dans la suite de la description, on prend pour exemple un moteur à quatre cylindres.

Ainsi, la fréquence de vibration du circuit d'admission qui favorise le remplissage naturel correspond à la moitié de la fréquence de rotation du moteur un régime déterminé.

La modification du volume du circuit d'admission 14 selon l'invention permet ainsi de modifier sa géométrie pour que sa fréquence de résonance corresponde à la moitié de la fréquence de rotation du moteur 12 pour favoriser le remplissage naturel des chambres de combustion du moteur 12.

Un tel circuit d'admission 14 permet d'optimiser le remplissage des chambres de combustion du moteur 12 de façon à diminuer le régime d'accrochage du turbocompresseur, mais aussi d'augmenter le rendement du turbocompresseur 18, et par conséquent d'améliorer les performances du moteur 12, dans une plage élargie de régimes

Conformément à la figure 2, la portion intermédiaire 50 peut comporter un premier tronçon 52 dont la section est sensiblement égale à la section du conduit d'admission 26.

La longueur du premier tronçon 52 est variable de façon que le volume du conduit d'admission 26 puisse être modifié pour faire varier la fréquence de résonance du circuit d'admission 14.

Ici, le premier tronçon 52 comporte un élément télescopique 54 qui est mobile en translation selon la direction représentée par la double flèche 56. Le mouvement de l'élément télescopique 54 provoque un allongement ou un raccourcissement de la longueur du conduit d'admission 26, ce qui modifie son volume et par conséquent sa fréquence de résonance.

Le mouvement de l'élément télescopique 54 est commandé par un actionneur mécanique 57 tel qu'un vérin.

Avantageusement, la portion intermédiaire 50 est insérée dans le second élément 32, c'est-à-dire en aval du dispositif 28 de refroidissement d'air. Ainsi, le dispositif de refroidissement d'air 28 ne perturbe pas la propagation des vibrations des cylindres vers la portion intermédiaire 50 qui permet de modifier la fréquence de résonance du circuit d'admission 12, notamment la fréquence de résonance de sa partie inférieure, c'est-à-dire le second élément 32.

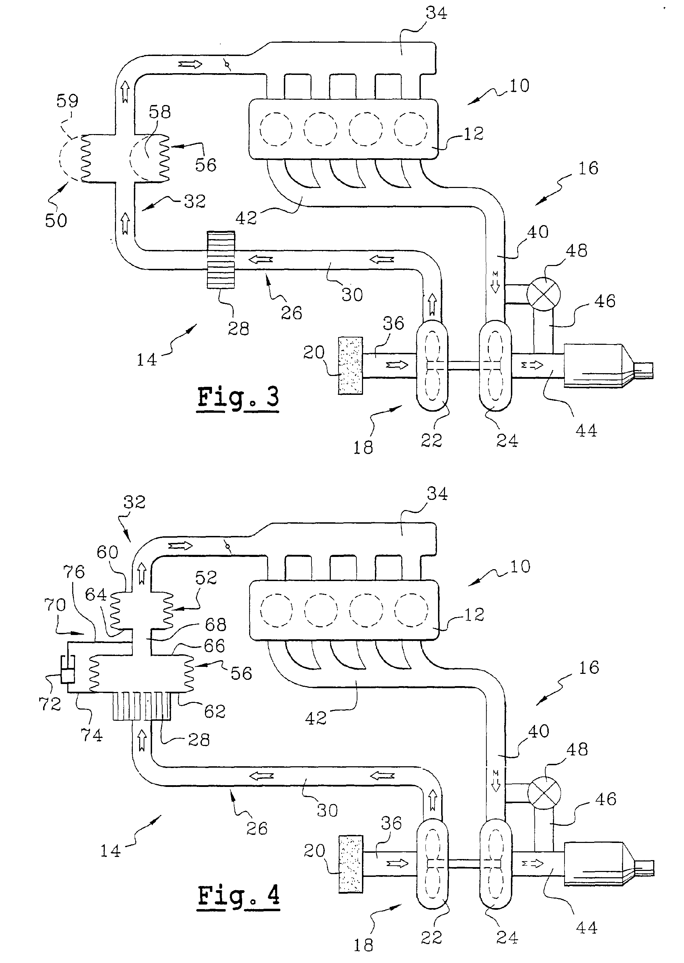

Conformément à la figure 3, la portion intermédiaire 50 peut comporter un second tronçon 56 dont la section est supérieure à la section du conduit d'admission 26.

Ici le second tronçon 56 comporte un soufflet 58 en accordéon qui est mobile en translation selon la direction générale du second élément 32 dans lequel il est inséré.

La section du second tronçon 56 étant supérieure à la section du conduit d'admission 26, et notamment du second élément 32, une faible variation de la longueur du second tronçon 56 provoque une variation du volume du conduit d'admission 26 qui est plus importante que celle provoquée par le premier tronçon 52 pour un déplacement identique.

Le soufflet 58 peut être déformé selon une direction perpendiculaire à la direction générale du flux d'air qui le traverse, conformément à la position 59 représentée en trait pointillé à la figure 3.

Une autre solution consiste à déformer le soufflet 58 selon une direction sensiblement parallèle à la direction générale du flux d'air qui le traverse.

Un tel second tronçon 56 nécessite alors qu'au moins une portion du conduit d'admission 26 soit flexible pour s'adapter à ses variations de longueur.

De façon similaire au premier tronçon 52, le mouvement du soufflet 58 peut alors être commandé par un actionneur mécanique, non représenté, tel qu'un vérin.

La figure 4 représente une réalisation avantageuse du circuit 14 d'admission d'air selon l'invention.

Le circuit 14 d'admission d'air comporte une portion intermédiaire 50 qui est constituée d'un premier tronçon 52 et d'un second tronçon 56 qui comportent tous les deux un soufflet.

L'extrémité aval 60 du premier tronçon 52 ainsi que l'extrémité amont 62 du second tronçon 56 sont fixes par rapport au circuit 14 d'admission d'air. Elles sont par exemple fixées sur une zone de fixation de la structure du véhicule automobile.

De plus, l'extrémité amont 64 du premier tronçon 52 et l'extrémité aval 66 du second tronçon 56 sont liées entre elles par une portion 68 de conduit rigide dont le diamètre correspond avantageusement au diamètre du conduit d'admission 26, de façon à former un bloc 70.

Un vérin d'actionnement 72 comporte deux extrémités dont l'une 74 est fixée à la structure du véhicule automobile et l'autre 76 est liée au bloc 70.

Ainsi, lorsqu'on augmente la longueur du premier tronçon 52, on diminue d'autant la longueur du second 56, et inversement.

Un tel agencement est très avantageux puisqu'il permet une grande plage de variations de la fréquence de résonance du circuit 14 d'admission sans nécessiter de modifications importantes du circuit 14.

La portion intermédiaire 50 peut être intégrée de façon simple à la place d'une portion du conduit d'admission 26.

En effet, la longueur de la portion intermédiaire 50 est constante. De ce fait, le conduit d'admission 26 ne nécessite aucune portion flexible.

De façon à simplifier la fixation de l'extrémité amont 62 du second tronçon 56 par rapport à la structure du véhicule automobile, il est possible de la raccorder directement à la sortie du dispositif 28 de refroidissement d'air.

La portion intermédiaire 50 permet la variation du volume du conduit d'admission 26 dans une plage relativement large. Ainsi, le même circuit d'admission 14 peut être utilisé pour des moteurs différents présentant notamment des cylindrées différentes.

Pour chaque régime du moteur, la partie intermédiaire 50 permet d'adapter la fréquence de résonance du conduit d'admission 26 de façon que l'air qui y circule soit soumis à une fréquence favorable au remplissage naturel des chambres de combustion du moteur 12.

## Revendications

1. Circuit (14) d'admission d'air d'un moteur (12) suralimenté par un turbocompresseur (18) du type qui comporte un conduit d'admission (26) qui relie le compresseur (22) du turbocompresseur (18) et un répartiteur (34) d'air qui permet de répartir l'air entre les orifices d'admission des chambres de combustion, **caractérisé en ce qu'**une portion intermédiaire (50) est insérée dans le conduit d'admission (26) et **en ce que** le volume de la portion intermédiaire est variable de façon à faire varier la fréquence de résonance du circuit (14) d'admission en fonction de la fréquence d'excitation du moteur (12) pour favoriser le remplissage naturel des chambres de combustion du moteur (12).

2. Circuit (14) d'admission d'air selon la revendication précédente, **caractérisé en ce que** la portion intermédiaire (50) comporte au moins un premier tronçon (52) dont la section est sensiblement égale à la section du conduit d'admission (26), et **en ce que** la longueur est variable de façon à faire varier la fréquence de résonance du circuit (14) d'admission.

3. Circuit (14) d'admission d'air selon l'une des revendications 1 ou 2, **caractérisé en ce que** la portion intermédiaire (50) comporte au moins un second tronçon (56) dont la section est supérieure à la section du conduit d'admission (26), et **en ce que** la longueur du second tronçon (56) est variable de façon à faire varier la fréquence de résonance du circuit (14) d'admission.

4. Circuit (14) d'admission d'air selon l'une des revendications 2 ou 3, **caractérisé en ce que** le premier (52) et/ou le second tronçon (56) comporte un soufflet (58).

5. Circuit (14) d'admission d'air selon l'une quelconque des revendications 2 à 4, **caractérisé en ce que** le premier (52) et/ou le second tronçon (56) comporte un élément télescopique (54).

6. Circuit (14) d'admission d'air selon l'une quelconque des revendications 2 à 5, **caractérisé en ce que** la longueur d'au moins un tronçon (52, 56) du conduit d'admission est commandée par un actionneur mécanique (57, 74) relié à une extrémité mobile (64, 66) du tronçon correspondant.

7. Circuit (14) d'admission d'air selon l'une quelconque des revendications 4 à 6 prise en combinaison avec les revendications 2 et 3, **caractérisé en ce que** les longueurs du premier et du second tronçons (52, 56) sont établies simultanément par un actionneur mécanique unique (74).

8. Circuit (14) d'admission d'air selon la revendication précédente, **caractérisé en ce que** la longueur totale du conduit d'admission (26) est constante et **en ce que** l'actionneur unique (74) fait varier les longueurs respectives du premier et du second tronçons (52, 56).

9. Circuit (14) d'admission d'air selon la revendication précédente, **caractérisé en ce que** le premier tronçon (52) est agencé en aval du second tronçon (56), par rapport au sens de l'écoulement de l'air dans le conduit d'admission (26).

10. Circuit (14) d'admission d'air selon la revendication précédente, **caractérisé en ce que** l'extrémité aval (60) du premier tronçon (52) et l'extrémité amont (62) du second tronçon (56) sont fixes, et **en ce que** l'extrémité amont (64) du premier tronçon (52) et l'extrémité aval (66) du second tronçon (56) sont liées entre elles ainsi qu'à un actionneur unique (74) de façon que lorsqu'on augmente la longueur du premier tronçon (52), on diminue d'autant la longueur du second tronçon (56) et inversement.

11. Circuit (14) d'admission d'air selon l'une quelconque des revendications précédentes, **caractérisé en ce qu'**un dispositif (28) de refroidissement d'air est agencé dans le circuit (14) d'admission en aval de la turbine (24) du turbocompresseur (18) et en amont de la portion intermédiaire (50).

12. Circuit (14) d'admission d'air selon la revendication précédente prise en combinaison avec la revendication 9, **caractérisé en ce que** l'extrémité amont (62) du second tronçon (56) est raccordée directement à la sortie du dispositif (28) de refroidissement d'air.
